# EUROPÄISCHE PATENTSCHRIFT

(11) **EP 0 563 553 B1**
(45) Veröffentlichungstag und Bekanntmachung des Hinweises auf die Patenterteilung: **28.05.1997**
(21) Anmeldenummer: 93102308.9
(22) Anmeldetag: 15.02.1993
(51) Int. Cl.: F02C 6/16, F02C 7/18

(54) **Luftkühlung von Turbinen**
Air cooling of turbines
Refroidissement de turbines par air

(30) Priorität: 31.03.1992 DE 4210541
(43) Veröffentlichungstag der Anmeldung: 06.10.1993
(73) Patentinhaber: ASEA BROWN BOVERI AG, 5400 Baden (CH)
(72) Erfinder: Frutschi, Hans Ulrich, CH-5223 Riniken (CH); Lindvall, Anders, CH-5400 Baden (CH); Wettstein, Hans, Dr., CH-5223 Riniken (CH)

(56) Entgegenhaltungen:
- EP-A- 0 079 624
- EP-A- 0 364 106
- WO-A-81/02443
- DE-A- 2 728 382
- DE-A- 3 424 138
- FR-A- 2 215 530
- GB-A- 2 062 763

## Beschreibung

### Technisches Gebiet

Die vorliegende Erfindung betrifft ein Verfahren zum Betrieb einer Gasturbogruppe, wie sie z.B. aus DE-A-27 28 382 bekannt ist.

### Stand der Technik

In einer thermischen Kraftwerksanlage, insbesondere einer Luftspeicheranlage, können für die Turbinenkühlung besondere Probleme auftreten. Diese entstehen durch das für die Kompatibilität mit einem wirtschaftlich tragbaren Druckluftspeicher erforderlichen sehr hohen Druckverhältnis von etwa 30:1 bis 70:1, welches, wiederum aus wirtschaftlichen Gründen, mindestens eine Zwischenerhitzung der Expansion der Turbine erfordert. Dabei ergibt sich für die Hochdruckturbine, im folgenden HD-Turbine genannt, ein wesentlich kleineres Wärme- bzw. Temperaturgefälle als für die Niederdruckturbine, im folgenden ND-Turbine genannt. Bei einer Luftspeichergasturbine, bei welcher der Verdichter mit einer Zwischenkühlung ausgerüstet ist, wird durch die motorisch arbeitende elektrische Maschine Druckluft in eine Speicherkaverne befördert. Ein Luft/Wasser-Wärmetauscher kühlt die von der letzten Kompressoreinheit kommende warme Druckluft zwecks Minderung ihres spezifischen Volumens ab und führt die Wärme in eine Druckwasser-Speicheranlage über, wobei während dieses sogenannten Ladebetriebes die entsprechenden Absperrorgane geöffnet sind. Soll nun aus der gespeicherten Druckluft wieder elektrische Energie erzeugt werden, wird über eine Steuerung die Verdichtergruppe abgefahren. Durch Oeffnen des entsprechenden Abschlussorgans wird die Turbinengruppe, beispielsweise bestehend aus einer HD-Turbine, einer ND-Turbine und der nun generatorisch zu betreibenden elektrischen Maschine angefahren. Dies geschieht zunächst nur durch Druckluft aus dem Speicher, welche im Wärmetauscher durch das gespeicherte Heisswasser vorgewärmt wird. Nach dem Zünden in der Brennkammer kann die Produktion von elektrischer Energie aufgenommen werden. Es ist aber auch möglich, die Anlage bei entsprechender Disposition der Absperrorgane und Kupplungen als Gasturbine durchgeschaltet arbeiten zu lassen. Dabei kann gleichzeitig etwas Luft gespeichert werden, oder aus der Kaverne entnommen werden. Eine solche Anlage kann den heutigen Wirtschaftlichkeitsvorgaben bezüglich Verminderung des Brennstoffverbrauches nicht mehr Stand halten, wobei hinzu kommt, dass solche Anlagen die heutigen vorzuweisenden maximalen Schadstoff-Emissionswerte nicht zu erfüllen vermögen. Zwar ist es richtig, dass zur Erzeugung von Dampf ein Abhitzekessel zugeschaltet werden kann. Der so erzeugte Dampf kann einer Dampfturbinengruppe zugeführt werden, oder er wird der Gasturbinengruppe nach bekannten Arten direkt zugeleitet. Ob die eine oder die andere Methode zur Nutzung des Dampfes bevorzugt wird, hängt von der Betriebsdauer im Turbinenbetrieb ab. Für weniger als ca. 2-4 Stunden pro Tag wird Dampfeinblasung richtig sein. Wird nun eine solche thermische Kraftwerksanlage optimiert, ergibt sich bei den dem Stand der Technik entsprechenden Heissgastemperaturen am Eintritt in die HD-Turbine eine derart hohe Austrittstemperatur der Rauchgase aus der Turbine, dass diese nicht ohne weiteres als Kühlmittel für die ND-Turbine verwendet werden können. Deswegen wird die Turbine üblicherweise mit Kühlluft gekühlt, welche vor der Kaverne der Luftspeicheranlage entnommen wird, wie dies für die Kühlung von Turbinen üblich ist. Im durchgeschalteten Gasturbinenbetrieb könnte natürlich zur Vermeidung von Drosselverlusten die zur Turbine führende Kühlluft an druckmässig passender Stelle des Verdichters entnommen werden. Während dem der Verbrauch von Kühlluft für die Turbine bei gegebener Mischtemperatur an deren Eintritt vor allem den Turbinen-Wirkungsgrad durch Mischverluste reduziert, wirkt sich der Verbrauch an Kühlluft für die ND-Turbine sehr nachteilig aus, indem diese an der HD-Turbine vorbeigeht, also dort keine Arbeit leistet.

### Darstellung der Erfindung

Hier will die Erfindung Abhilfe schaffen. Der Erfindung, wie sie in den Ansprüchen gekennzeichnet ist, liegt die Aufgabe zugrunde, bei einem Verfahren der eingangs genannten Art Massnahmen vorzuschlagen, welche eine Steigerung der Wirtschaftlichkeit und eine Minimierung der Schadstoff-Emissionen mit sich bringen, demnach die oben dargelegten Nachteile zu beheben vermag.

Der wesentliche Vorteil der Erfindung ist darin zu sehen, dass die der Hochdruckluftleitung, stromab der Verdichtergruppe, entnommene Kühlluft im Entladebetrieb der Luftspeicheranlage ein Temperaturniveau von vielleicht 200°C aufweist, was wesentlich unter dem üblichen Kühllufttemperaturniveau von 360-400°C liegt. So kann diese Kühlluft in einer Kaskadenwirkung durch mehrere kalorisch belastete Aggregate, beispielsweise Brennkammer, Turbine etc., geschickt und zu deren Kühlung zuerst im geschlossenen und anschliessend im offenen oder geschlossenen Strömungspfad verwendet werden. Auf diese Weise werden z.B. die Mischverluste in der Turbine reduziert, wodurch diese einen besseren Wirkungsgrad aufweist.

Vorteilhafte und zweckmässige Weiterbildungen der erfindungsgemässen Aufgabenlösung sind in den weiteren Ansprüchen gekennzeichnet.

Im folgenden werden anhand der Zeichnungen Ausführungsbeispiele der Erfindung näher erläutert. Alle für das unmittelbare Verständnis der Erfindung nicht erforderlichen Elemente sind fortgelassen. Die Strömungsrichtung der Medien ist mit Pfeilen angegeben.

### Kurze Beschreibung der Zeichnungen

Es zeigt:
- Fig. 1: eine Kaskadenschaltung von Stator der Hochdruckturbine und Stator und Rotor der Niederdruckturbine und
- Fig. 2: eine kühlluftseitige Kaskadenschaltung von Brennkammer und Turbine

### Wege zur Ausführung der Erfindung, gewerbliche Verwertbarkeit

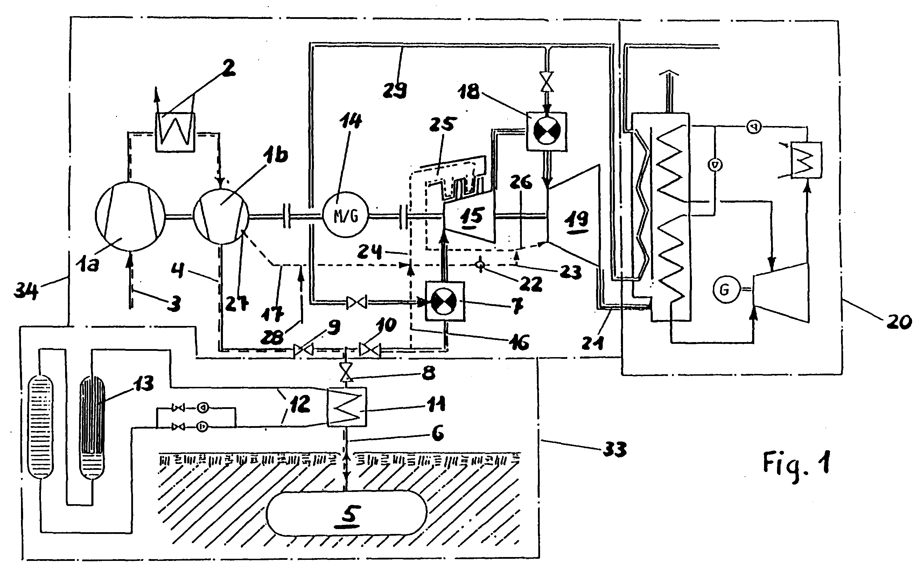

Fig. 1 zeigt eine Luftspeichergasturbine, bestehend aus einer Gasturbogruppe 34, einer Luftspeicheranlage 33 und einem Dampfkreislauf 20. Eine Verdichtergruppe der Gasturbogruppe 34, bestehend aus einem ersten Verdichter 1a, einem zweiten Verdichter 1b und einem dazwischen geschalteten Zwischenkühler 2, verdichtet die angesaugte Luft 3 und fördert sie über eine Leitung 4 in eine Kaverne 5 der Luftspeicheranlage 33. Diese Förderung der verdichteten Luft zu Kaverne 5 geschieht über eine weitere Leitung 6, welche von der ersten Leitung 4 abzweigt. Die Leitung 4 ist zugleich Förderungsstrang zu einem ersten Wärmeerzeuger 7 der Gasturbogruppe 34, wobei eine Reihe von Stellgliedern die betriebsmässige Schaltung der Leitungen 4, 6 untereinander übernehmen. Zunächst weist die Leitung 6 zur Kaverne 5 unmittelbar nach deren Abzweigung von der Leitung 4 ein Stellglied 8 auf, wobei stromauf und stromab desselben zwei weitere Stellglieder 9, 10 die Zuschaltbarkeit der jeweiligen Leitung gewährleisten. Eine Förderung der verdichteten Luft zur Kaverne 5 geschieht, indem das erste Stellglied 9 in der Leitung 4 und das Stellglied 8 in der Leitung 6 offen sind, während das zweite Stellglied 10 in der Leitung 4 geschlossen bleibt. Durch Schliessen des Stellgliedes 8 in der Leitung 6 und gleichzeitiges Oeffnen der beiden Stellglieder 9, 10 in der Leitung 4 wird die Anlage als reine Gasturbogruppe durchgeschaltet und betrieben. Stromab des Stellgliedes 8 in der Leitung 6 zur Kaverne 5 wirkt ein Wärmetauscher 11, der über ein Leitungssystem 12 mit einem thermischen Speicher 13 verbunden ist. Dieser Speicher 13 nimmt die Verdichtungsenthalpie der letzten Verdichterstufe 1b auf, wobei die Verdichter durch die als Motor arbeitende elektrische Maschine 14 angetrieben werden und so die zu speichernde Energie aus dem Stromnetz beziehen. Die im thermischen Speicher 13 enthaltende Verdichtungsenthalpie wird der kalten Speicherluft im Entladebetrieb wieder zugeführt, so dass deren Arbeitsfähigkeit steigt. Es hat sich gezeigt, dass eine weitere Anhebung der Arbeitsmitteltemperatur mittels eines etwa mit einem gasförmigen Brennstoff betriebenen Wärmeerzeugers die Arbeitsfähigkeit nochmals signifikant erhöht, was von grossem ökonomischem Vorteil ist, denn die zusätzlichen Investitionen sind gemessen am Arbeitsgewinn klein. Erst so kann ein Luftspeicherkraftwerk überhaupt rentabel betrieben werden. Danebst muss aber berücksichtigt werden, dass um die Kosten für die Kaverne 5 so tief wie möglich zu halten, der Luftdruck so hoch wie möglich angesetzt werden muss: 50 bis 70 bar sind hier die Regel. Ein derart hoher Druck begünstigt aber die Entstehung von NOx im ersten Wärmeerzeuger 7, stromauf einer mit diesen Heissgasen zu beaufschlagenden Hochdruckturbine 15, was aus ökologischer Sicht unzulässig ist. Mit geeigneten Mitteln, beispielsweise durch Eindüsung von Ammoniak an geeigneter Stelle, lässt sich hier Abhilfe schaffen.
Was hingegen noch vorzusehen ist, betrifft die Kühlung der kalorisch belasteten Aggregate der Anlage. Die Figur zeigt hierzu eine Kaskadenschaltung von Stator 25 der Hochdruckturbine und Stator und Rotor der Niederdruckturbine 19. Die der Luftleitung 4 über eine Kühlluftleitung 16 entnommene Kühlluft weist im Entladebetrieb der Luftspeicheranlage 33 ein Temperaturniveau von etwa 200°C auf, was wesentlich unter dem üblichen Kühllufttemperaturniveau von 360-400°C liegt. Demnach wird diese Kühlluft über eine Fortsetzungsleitung 24 der Kühlluftleitung 16 zuerst im Stator 25 der Hochdruckturbine 15 zu dessen Kühlung im geschlossenen Strömungspfad verwendet und anschliessend über eine Rückführleitung 26 der Niederdruckturbine 19 für deren Kühlung zugeführt. Auf diese Weise werden die Mischverluste in der Hochdruckturbine 15 reduziert, wodurch diese einen besseren Wirkungsgrad aufweist. Im durchgeschalteten Gasturbobetrieb wird die genannte Kühlluft vorteilhafterweise an einer druckmässig passenden Anzapfstelle 27 des Verdichters 1b entnommen. Sollte die Kühllufttemperatur in der Rückführleitung 26 zu hoch sein, kann hiergegen Abhilfe geschaffen werden, indem über eine Bypassleitung 23 in erforderlichem Mass kältere Kühlluft aus den Kühlluftleitungen 16 bzw. 17 zugemischt wird. Die entsprechende Dosierung geschieht über ein Dosierorgan 22, welches in Bypassleitung 23 plaziert ist. Aber auch die vorhandenen Wärmeerzeuger 7, 18 müssen gekühlt werden und verbrauchen deshalb Kühlluft. Während dem die Kühlung des hochdruckseitigen Wärmeerzeugers 7 bei gegebener Mischtemperatur am Eintritt in die Hochdruckturbine 15 keinen Einfluss auf Leistung und Wirkungsgrad hat, bewirkt der Kühlluftverbrauch für den niederdruckseitigen Wärmeerzeuger 18 eine schädliche Reduktion des Arbeitsmitteldurchflusses durch die Hochdruckturbine 15. Wie bereits erwähnt, kann die Anlage, bei entsprechender Schaltung der Stellglieder, als reine Gasturbine betrieben werden. Die dargelegten Methoden zur Reduktion der NOx-Emissionen als auch für eine effiziente, nicht wirkungsgradschädigende Kühlung haben uneingeschränkte Gültigkeit. Ferner gelten die dargelegten Zusammenhänge auch für den Fall, dass eine dezentrale Anordnung zwischer Verdichtergruppe 1a, 1b, 2 und der Turbinengruppe 15, 19 gewählt wird, wobei der kavernenmässige Druckluftspeicher 5 die Gestalt einer langen Verbindungsleitung zum Transport von Energie annimmt. Zur weiteren Verbesserung des Wirkungsgrades und der Leistungsfähigkeit der Gasturbogruppe wird vorzugsweise daran ein sekundärer Dampfprozess 20, wie er beispielsweise in EP-B1-0 150 340 beschrieben ist, angekoppelt, welcher die Abgase 21 aus der Niederdruckturbine 19 in bekannter Weise weitgehend kalorisch ausnutzt. An Stelle dieses Dampfprozesses 20 kann selbstverständlich auch eine andere Abwärmenutzung treten, wie beispielsweise eine Fernheizung. Der zur Speisung der Wärmeerzeuger 7, 18 notwendige Brennstoff 29 wird, um Exergieverluste zu minimieren, möglichst im Gegenstrom zu den Rauchgasen in einem Abhitzekessel des Dampfprozesses 20 vorgewärmt.

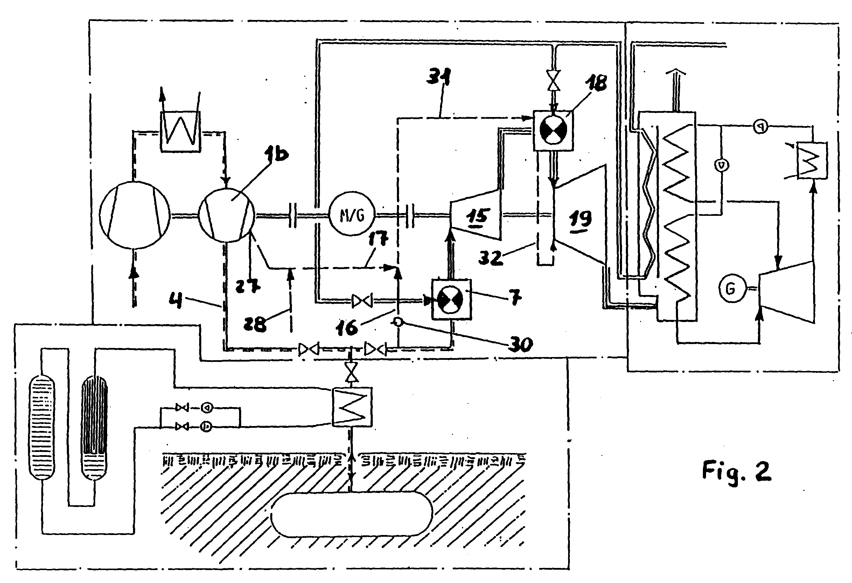

Bei der nachfolgenden Beschreibung von Fig. 2 wird nur auf die schaltungstechnische Unterschiede gegenüber Fig. 1 eingegangen. Diese Figur zeigt, eine kühlluftseitigen Kaskadenschaltung zwischen dem niederdruckseitigen Wärmeerzeuger 18 und der Turbine 19. Die relativ kalte Kühlluft über eine Leitung 31, welche im Entladebetrieb über die Luftleitung 4 oder im Gasturbobetrieb über eine mit dem Verdichter 1b an passender Anzapfstelle 27 verbundener Zumischleitung 17 gespiesen wird, wird in Erfüllung ihrer Kühlaufgabe im niederdruckseitigen Wärmeerzeuger 18 so vorgewärmt, dass sie die Kühlung der stromab wirkenden Niderdruckturbine 19 über eine weitere vom Wärmeerzeuger 18 abgehenden Leitung 32 in üblicher Weise übernehmen kann. Bei Entladebetrieb sorgt ein in der Kühlluftleitung 16 plaziertes Dosierorgan 30, das stromab der Anzapfstelle an der Luftleitung 4 wirkt, für eine gezielte Mengenregulierung. Eine etwaige notwendige Verminderung der Lufttemperatur in der Zumischleitung 17 bei Gasturbobetrieb lässt sich erreichen, indem in diese Leitung eine Menge Wasser oder Dampf 28 eingedüst wird.

### Bezeichnungsliste

- 1a, 1b: Verdichter
- 2: Zwischenkühler
- 3: Angesaugte Luft
- 4: Luftleitung aus dem Verdichter
- 5: Kaverne
- 6: Luftleitung von und zur Kaverne
- 7: Wärmeerzeuger
- 8, 9, 10: Stellglieder
- 11: Wärmetauscher
- 12: Leitungssystem zum thermischen Speicher
- 13: Thermischer Speicher
- 14: Elektrische Maschine
- 15: Hochdruckturbine
- 16: Kühlluftleitung
- 17: Kühlluftleitung
- 18: Wärmeerzeuger
- 19: Niederdruckturbine
- 20: Dampfkreislauf
- 21: Abgase
- 22: Dosierorgan
- 23: Bypassleitung
- 24: Kühlluftleitung
- 25: Stator der Turbine
- 26: Rückführleitung
- 27: Anzapfstelle am Verdichter
- 28: Dampf/Wasser-Leitung
- 29: Brennstoffleitung
- 30: Dosierorgan
- 31, 32: Kühlluftleitungen
- 33: Luftspeicheranlage
- 34: Gasturbogruppe

## Patentansprüche

1. Verfahren zum Betrieb einer Gasturbogruppe, im wesentlichen bestehend aus mindestens einer Verdichtereinheit, mindestens einer Brennkammer, mindestens einer Turbine und mindestens einer elektrischen Maschine, wobei zur Kühlung einer oder mehrerer in Wirkverbindung mit dem Arbeitsluftstrom stehenden kalorisch belasteten Aggregate der Gasturbogruppe eine Serieschaltung mit einem und demselben Kühllluftstrom angewendet wird, wobei mindestens ein stromab der Verdichtereinheit (1a, 1b) wirkendes, kalorisch belastetes Aggregat (15) durch den Kühlluftstrom (24) im geschlossenen Strömungspfad gekühlt wird, und wobei derselbe Kühlluftstrom nach anschliessender Kühlung eines weiteren kalorisch belasteten Aggregates (19) dem hier durchströmenden Arbeitsluftstrom zugemischt wird.

2. Verfahren nach Anspruch 1, dadurch gekennzeichnet, dass der Kühlluftstrom aus dem letzten Verdichter (1b) der Verdichtereinheit, stromauf seines Ausganges, entnommen wird.

3. Verfahren nach Anspruch 1, dadurch gekennzeichnet, dass der Kühlluftstrom aus einem Luftspeicher (5) entnommen wird.

4. Verfahren nach Anspruch 3, dadurch gekennzeichnet, dass stromab des Luftspeichers ein Wärmetauscher (11) wirkt, und dass der Kühlluftstrom stromab dieses Wärmetauschers entnommen wird.

5. Verfahren nach Anspruch 1, dadurch gekennzeichnet, die Turbinen (15, 19) in Serie gekühlt werden.

6. Verfahren nach Anspruch 1, dadurch gekennzeichnet, dass die niederdruckseitige Brennkammer (18) und die niederdruckseitige Turbine (19) in Serie gekühlt werden.

## Claims

1. Method of operating a gas turbine group, essentially comprising at least one compressor unit, at least one combustion chamber, at least one turbine and at least one electrical machine, a series connection with one and the same cooling air flow being used for cooling one or more assemblies, subjected to thermal loading, of the gas turbine group which are in effective connection with the working air flow, at least one assembly (15) which is subjected to thermal loading and acts downstream of the compressor unit (1a, 1b) being cooled in a closed flow path by the cooling air flow (24), and the same cooling air flow, after subsequently cooling a further assembly (19), subjected to thermal loading, being mixed in with the working air flow passing through the latter.

2. Method according to Claim 1, characterized in that the cooling air flow is extracted from the last compressor (1b) of the compressor unit upstream of its outlet.

3. Method according to Claim 1, characterized in that the cooling air flow is extracted from an air reservoir (5).

4. Method according to Claim 3, characterized in that a heat exchanger (11) acts downstream of the air reservoir and in that the cooling air flow is extracted downstream of this heat exchanger.

5. Method according to Claim 1, characterized in that the turbines (15, 19) are cooled in series.

6. Method according to Claim 1, characterized in that the combustion chamber (18) at the low-pressure end and the turbine (19) at the low-pressure end are cooled in series.

## Revendications

1. Procédé pour la conduite d'un turbogroupe à gaz, se composant essentiellement d'au moins une unité de compresseurs, d'au moins une chambre de combustion, d'au moins une turbine et d'au moins une machine électrique, dans lequel on utilise un montage en série avec un seul et même courant d'air de refroidissement pour refroidir un ou plusieurs ensembles sollicités thermiquement du turbogroupe à gaz, se trouvant en liaison active avec le courant d'air de travail, dans lequel on refroidit par le courant d'air de refroidissement (24) suivant un chemin d'écoulement fermé au moins un ensemble sollicité thermiquement (15) opérant en aval de l'unité de compresseurs (1a, 1b), et dans lequel on mélange le même courant d'air de refroidissement, après refroidissement ultérieur d'un autre ensemble sollicité thermiquement (19), au courant d'air de travail circulant à travers celui-ci.

2. Procédé suivant la revendication 1, caractérisé en ce que le courant d'air de refroidissement est prélevé dans le dernier compresseur (1b) de l'unité de compresseurs, en amont de sa sortie.

3. procédé suivant la revendication 1, caractérisé en ce que le courant d'air de refroidissement est prélevé dans un réservoir d'air (5).

4. procédé suivant la revendication 3, caractérisé en ce qu'un échangeur de chaleur (11) opère en aval du réservoir d'air et en ce que le courant d'air de refroidissement est prélevé en aval de cet échangeur de chaleur.

5. procédé suivant la revendication 1, caractérisé en ce que les turbines (15, 19) sont refroidies en série.

6. Procédé suivant la revendication 1, caractérisé en ce que la chambre de combustion (18) située du côté de la basse pression et la turbine (19) située du côté de la basse pression sont refroidies en série.
